# EUROPÄISCHE PATENTSCHRIFT

(11) **EP 3 753 242 B1**
(45) Veröffentlichungstag und Bekanntmachung des Hinweises auf die Patenterteilung: **17.08.2022**
(21) Anmeldenummer: 19703075.2
(22) Anmeldetag: 04.02.2019
(51) Int. Cl.: H04N 5/232, B60R 1/00

(54) **VERFAHREN ZUM VERFOLGEN EINES OBJEKTS IN EINEM OPTISCHEN SUCHFENSTER EINER KAMERA FÜR EIN FAHRZEUG**
METHOD FOR TRACKING AN OBJECT IN AN OPTICAL SEARCH WINDOW OF A CAMERA FOR A VEHICLE
PROCÉDÉ DESTINÉ À SUIVRE UN OBJET DANS UNE FENÊTRE DE RECHERCHE OPTIQUE D'UNE CAMÉRA POUR UN VÉHICULE

(30) Priorität: 15.02.2018 DE 102018202360
(43) Veröffentlichungstag der Anmeldung: 23.12.2020
(73) Patentinhaber: Robert Bosch GmbH, 70442 Stuttgart (DE)
(72) Erfinder: MIRAMO, Jihad, 70469 Stuttgart (DE)
(86) Internationale Anmeldenummer: PCT/EP2019/052571
(87) Internationale Veröffentlichungsnummer: WO 2019/158379

(56) Entgegenhaltungen:
- US-A1- 2004 212 686
- US-A1- 2005 259 888
- US-A1- 2016 048 216
- US-A1- 2016 134 799
- US-A1- 2017 308 989

## Beschreibung

### Stand der Technik

Die Erfindung geht von einer Vorrichtung oder einem Verfahren nach Gattung der unabhängigen Ansprüche aus. Gegenstand der vorliegenden Erfindung ist auch ein Computerprogramm.

Es können Systeme zur Fahrerüberwachung bzw. Gesichtserkennung für einen Fahrer eines Fahrzeugs verwendet werden, die mittels eines rechenintensiven Gesichtserkennungsalgorithmus ein komplettes Bild nach einem menschlichen Gesicht durchsuchen. Sobald ein Gesicht erkannt wurde, wird beispielsweise ein Verfolgungsalgorithmus angewendet, um das erkannte Gesicht in einem kleinen Suchfenster in dem folgenden Bildrahmen zu verfolgen.

Aus der US 2016/134799 ist ein System und ein Verfahren zur optischen Bildstabilisierung im Fahrzeug bekannt.

Aus der US 2016/048216 A1 ist ein Verfahren und ein System zur Bewegungskompensation für eine Gestenerkennung und eine Objekterkennung bekannt.

Aus der US 2017/308989 A1 ist ein Verfahren zum Erfassen eines Bildes eines Verkehrsschildes mittels eines Bildsensors bekannt.

### Offenbarung der Erfindung

Vor diesem Hintergrund werden mit dem hier vorgestellten Ansatz ein Verfahren zum Verfolgen eines Objekts in einem optischen Suchfenster einer Kamera für ein Fahrzeug, weiterhin ein Steuergerät, das dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der hier vorgestellte Verfahrensansatz zum Verfolgen eines Objekts in einem optischen Suchfenster einer Kamera für ein Fahrzeug stellt unter anderem eine verbesserte Fahrerüberwachung bzw. Gesichtserkennung insbesondere für einen Fahrer eines Fahrzeugs mit einem gedämpften Fahrzeugsitz in Echtzeit mit reduziertem Rechenaufwand vor. Hierbei stellt eine vertikale Bewegung des Fahrzeugs insofern ein Problem dar, da dies zu einer schnellen Verschiebung der Sitzposition des Fahrzeugfahrers in Bezug auf einen Bildsensor führt. Durch Messen einer vertikalen Bewegung des Fahrzeugsitzes sowie einer Beschleunigungsänderung des Fahrzeugs in alle Richtungen und der Weitergabe dieser Informationen an eine Recheneinheit, die die Fahrererkennung und Verfolgungsaufgabe ausführt, kann ein Verfolgungsalgorithmus die Position des Fahrzeugfahrers im nächsten Bild besser vorhersagen und ein adäquates Suchfenster definieren. Zudem wird ein optischer und/oder softwarebasierter Bildstabilisierungsprozess durchgeführt, wodurch schärfere Bilder des Fahrzeugfahrers erzeugt werden.

Es wird ein Verfahren zum Verfolgen eines Objekts in einem optischen Suchfenster einer Kamera für ein Fahrzeug vorgestellt, wobei das Verfahren die folgenden Schritte aufweist:
Einlesen zumindest einer Beschleunigung des Fahrzeugs und eines
Fahrzeugsitzes repräsentierendes Beschleunigungssignals, wobei im Schritt des Einlesens die Beschleunigung unter Verwendung einer Steifigkeit einer Feder des Fahrzeugsitzes berechnet wird;
Bestimmen eines Bewegungsvektors von zumindest einem Objekt im Fahrzeuginnenraum und/oder in einer Fahrzeugumgebung unter Verwendung des zumindest einen Beschleunigungssignals; und
Bereitstellen eines, unter Verwendung des bestimmten Bewegungsvektors,
generierten Verschiebungsvektors an die Kamera zur Verschiebung des optischen Suchfensters in einem von der Kamera zur Erkennung des Objekts ermittelten Bildes, wobei das optische Suchfenster einen Teilbereich des von der Kamera eingelesenen Bildes repräsentiert.

Bei einem Objekt kann es sich um eine zu verfolgende Person in einem Fahrzeug, insbesondere aber um den Fahrer des Fahrzeugs, handeln. Bei einer Kamera kann es sich um eine fototechnische Apparatur handeln, die statische oder bewegte Bilder auf einem fotografischen Film oder elektronisch auf ein magnetisches Videoband oder digitales Speichermedium aufzeichnen, oder über eine Schnittstelle übermitteln kann. Insbesondere kann es sich bei der Kamera um eine Fahrerüberwachungskamera handeln, die im Innenraum des Fahrzeugs angeordnet ist und dazu ausgebildet ist, fortlaufend Bildinformationen oder Bilder des Fahrzeugfahrers und/oder anderer im Fahrzeug befindlichen Personen und/oder Objekte zu erfassen und bereitzustellen. Bei einem Fahrzeug kann es sich um ein Nutzfahrzeug zur Beförderung von Gütern, beispielsweise einen Lastkraftwagen (Lkw), handeln. Alternativ kann es sich bei dem Fahrzeug jedoch auch um ein Fahrzeug zur Personenbeförderung handeln. Bei einer Beschleunigung kann es sich um eine Änderung des Bewegungszustandes des Fahrzeugs auf einer Fahrbahn handeln, wobei es sich insbesondere um eine momentane zeitliche Änderungsrate der Geschwindigkeit des Fahrzeugs handelt. Insbesondere kann das die Beschleunigung des Fahrzeugs repräsentierende Beschleunigungssignal eine Beschleunigungsänderung abbilden. Bei einem Bewegungsvektor kann es sich um eine Repräsentation der physikalischen Betrags- und/oder Richtungsgröße der Bewegung des Fahrzeugfahrers und/oder eines anderen Objekts im Fahrzeuginnenraum und/oder in einer Fahrzeugumgebung handeln. Der hier vorgestellte Ansatz kann somit auch für Umfeldobjekte (biepsielsweise im Fahrzeugaußenraum) verwendet werden, wobei eine Kamera dann nach außen gerichtet ist und die Objekte andere Verkehrsteilnehmer sein können. In dem Fall wird beispielsweise eine Beschleunigung und/oder eine Beschleunigungssänderung des Fahrzeugs über einen Umfeld-Erfassungssensor ermittelt und diese zur Berechnung von einem Verschiebungsvektor des optischen Suchfensters im Erfassungsbereichs des Sensors verwendet. Bei einem Verschiebungsvektor kann es sich um eine Repräsentation der physikalischen Betrags- und/oder Richtungsgröße einer Verschiebung eines optischen Suchfensters in einem Abbild der Fahrzeuginnenraumkamera handeln.

Da eine vertikale Bewegung eines gedämpften Fahrzeugsitzes zu einem unscharfen Bild und/oder einer Verschiebung der Objekt- und/oder Personenposition relativ zu dem vorherigen Bildausschnitt führen kann, können die Größe und Position des optischen Suchfensters einer Kamera unzureichend werden. Dies führt zu einem Verlust der Nachverfolgung und der Notwendigkeit, eine rechenintensive Detektion (z. B. Gesichtserkennung) über das gesamte Bild durchzuführen. Die Vorteile des hier vorgestellten Verfahrensansatzes liegen somit insbesondere darin, dass das Durchführen eines rechenintensiven Objekterkennungsalgorithmus bzw. eines Gesichtserkennungsalgorithmus entfällt. Da die meisten Verfolgungsalgorithmen bestimmte objekt- und/oder personenspezifische Merkmale benötigen, um sie verfolgen zu können, und da diese Merkmale auf einem durch schnelle Bewegungen verschwommenen Objekt und/oder einer verschwommenen Person nicht mehr sichtbar bzw. identifizierbar sind, erhöht die hier vorgestellte Bildstabilisierung die Robustheit und Leistungsfähigkeit des Verfolgungsalgorithmus. In der Regel wird bei der Bildstabilisierung die Bewegung der Kamera oder des Objektivs beispielsweise unabhängig vom verfolgten Objekt gegengesteuert, um ein scharfes Bild zu erzielen. Da aber die Fahrerüberwachungskamera an der Kabine befestigt ist und das Objekt und/oder die Person sich in diesem Falle selbst bewegt, ist es sinnvoller, der Bewegung des Objekts und/oder der Person gegenüber der Kamera entgegenzuwirken und nicht umgekehrt. Die Aufrechterhaltung der Verfolgung und die Vermeidung des rechenintensiven Erkennungsprozesses verbessert die Verfügbarkeit des Systems und der Ressourcen, die es benötigt, um eine Echtzeit-Fahrerüberwachungsfunktion zu erreichen. Ferner beschränkt sich der hier vorgestellte Verfahrensansatz nicht nur auf die Verbesserung der Gesichtserkennung und -verfolgung, sondern ist auf jeden Bilderkennungs- und Verfolgungsprozess anwendbar.

Gemäß einer Ausführungsform kann im Schritt des Einlesens das zumindest eine Beschleunigungssignal eingelesen werden, das eine vertikale und/oder laterale und/oder longitudinale Beschleunigung des Fahrzeugs repräsentiert. Hierbei werden dem Steuergerät Informationen über die Beschleunigung des Fahrzeugs beispielsweise jederzeit (Beschleunigungsänderung) in alle Richtungen zugeführt, was eine verbesserte Verfolgungsfunktionalität sowie ein allgemein besseres Verständnis der Bewegung von Objekten und/oder Personen im Fahrzeuginneren ermöglicht.

Gemäß einer Ausführungsform kann im Schritt des Einlesens das zumindest eine Beschleunigungssignal von einem ESP-Sensor und/oder einen ABS-Sensor und/oder einem Beschleunigungsmesser (Accelerometer) und/oder einem Gyroskopen und/oder einer Frontkamera eingelesen werden. Unter einem ESP-Sensor kann ein Sensor verstanden werden, der in ein System zur Realisierung eines elektronischen Stabilitätsprogramms (ESP) integriert oder mit einem solchen System zusammenwirkt. Unter einem ABS-Sensor kann ein Sensor verstanden werden, der in ein System zur Realisierung eines Antiblockiersystems (ABS) integriert oder mit einem solchen System zusammenwirkt. Hierbei können diese Sensoren oder Sensoreinrichtungen des Fahrzeugs ermitteln, ob eine Geschwindigkeitszunahme oder -abnahme des Fahrzeugs stattfindet. Eine Frontkamera und/oder ein Radarsensor und/oder ein Lidar-Sensor kann eine Beschleunigung des Fahrzeugs ermitteln, indem die Kamera die auf sie zukommenden (beispielsweise statischen) Objekte bildlich erfasst, wobei eine Veränderung der Annäherungsgeschwindigkeit dieser bildlich erfassten Objekte die Beschleunigung des Fahrzeugs widergibt.

Gemäß einer Ausführungsform wird im Schritt des Einlesens das zumindest eine Beschleunigungssignal von einem Sitzhöhensensor eingelesen, wobei eine Höhenänderung eines Fahrzeugsitzes in eine Beschleunigung und/oder eine Beschleunigungsänderung umgerechnet wird. Durch Zuführen der Information zur zurückgelegten vertikalen Entfernung des Fahrzeugsitzes von dem Sitzhöhensensor zurück zu einem Steuergerät des Fahrzeugs, das die Verfolgungsaufgabe ausführt, ist es möglich, die Position des verfolgten Objekts und/oder der verfolgten Person vorherzusehen und somit die Position und die Größe des optischen Suchfensters im Bild besser zu definieren. Durch Zuführen der Höheninformation von dem Fahrzeugsitz zurück zu der Bildstabilisierungseinheit der Kamera kann diese die plötzlichen Bewegungen eines Fahrzeugfahrers kompensieren und somit zu schärferen Bildern des Fahrzeugfahrers führen.

Gemäß der Erfindung wird im Schritt des Einlesens die Beschleunigung unter Verwendung einer Steifigkeit einer Feder des Fahrzeugsitzes berechnet. Hierbei beeinflusst die Steifigkeit einer Feder des Fahrzeugsitzes eine Beschleunigung desselbigen insofern, als dass die Steifigkeit einen Widerstand des Fahrzeugsitzes gegenüber der auf den Fahrzeugsitz wirkenden Kraft durch die Beschleunigung des Fahrzeugs bedeutet.

Gemäß einer Ausführungsform kann im Schritt des Einlesens das zumindest eine Beschleunigungssignal mit einer Zeitinformation eingelesen werden, wobei im Schritt des Bestimmens eine Bestimmung des Bewegungsvektors auf Basis der Zeitinformation erfolgt. Hierbei liegt eine beschleunigte Bewegung des Fahrzeugs vor, sofern sich der Betrag der Geschwindigkeit des Fahrzeugs, die Richtung der Geschwindigkeit und/oder der Betrag und die Richtung der Geschwindigkeit des Fahrzeugs ändern, wobei das Beschleunigungssignal angibt, wie schnell sich die Geschwindigkeit des Fahrzeugs ändert. Hierfür ist eine Information über die Zeitdauer zur Bestimmung des Bewegungsvektors unerlässlich.

Gemäß einer Ausführungsform kann mit einem Schritt des Erkennens das Objekt in dem veränderten optischen Suchfenster erkannt werden. Hierbei kann das Objekt und/oder die Person dadurch erkannt werden, dass ein Verfolgungsalgorithmus durchgeführt wird, der eine Position des Objekts und/oder der Person in einem nächsten Bildrahmen besser vorhersagen und somit ein adäquates Suchfenster definiert werden kann.

Gemäß einer Ausführungsform kann im Schritt des Erkennens ein Verfolgungsalgorithmus die Position des erkannten Objekts in dem optischen Suchfenster bestimmen. Hierbei wird ein Verschiebungsvektor von einer Bildstabilisierungseinheit der Kamera verwendet, um das Bild entweder durch Verwendung einer Software oder durch eine optische und/oder sensorische Kompensation zu stabilisieren, um somit eine Bildschärfe zu verbessern und die Unschärfe des sich bewegenden Objekts und/oder der sich bewegenden Person in dem Bild zu reduzieren.

Gemäß einer Ausführungsform kann im Schritt des Veränderns eine optische und/oder Software und/oder sensorbasierte Bildstabilisierung durchgeführt werden. Unter einer Bildstabilisierung kann ein Vorgang verstanden werden, bei dem eine Veränderung oder Verschiebung von Pixeln oder Pixelwerten eines Bildes vorgenommen wird, um eine Irritation eines Bildbetrachters durch schnelle Sprünge von auf dem Bild abgebildeten Objekten zu vermeiden. Alternativ oder zusätzlich kann bei einer Bildstabilisierung, die insbesondere bei der Beobachtung von sich bewegenden Objekten und/oder Personen benötigt wird, der gesamte Bildsensor der Kamera verschoben werden. Der Bildsensor, der das Bild aufnimmt, kann so bewegt werden, dass er der Bewegung der Kamera entgegenwirkt. In dem hier vorgestellten Ansatz wird hierbei beispielsweise der Bildsensor so bewegt, dass er der Bewegung des verfolgten Objektes/Fahrers entspricht. Während die softwarebasierte Bildstabilisierung mehrere aufeinanderfolgende Videobilder benötigt, um ein stabilisiertes Bild zu berechnen, liefert die optische Bildstabilisierung unmittelbar ein ruhiges Bild, ohne den Verlust von Frames und ist dahingehen gegenüber eine softwarebasierten Bildstabilisierung zu bevorzugen.

Das hier vorgestellte Verfahren zum Verfolgen eines Objekts in einem optischen Suchfenster einer Kamera für ein Fahrzeug kann beispielsweise in Software oder Hardware oder in einer Mischform aus Software und Hardware beispielsweise in einem Steuergerät implementiert sein.

Der hier vorgestellte Ansatz schafft ferner ein Steuergerät, das ausgebildet ist, um die Schritte einer Variante des hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Ansicht eines Fahrzeugs gemäß einem Ausführungsbeispiel;
Fig. 2 einen schematischen Systemaufbau eines Verfahren zum Verfolgen eines Objekts in einem optischen Suchfenster einer Kamera gemäß einem Ausführungsbeispiel; und
Fig. 3 ein Ablaufdiagramm eines Ausführungsbeispiels eines Verfahrens zum Verfolgen eines Objekts in einem optischen Suchfenster einer Kamera für ein Fahrzeug gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

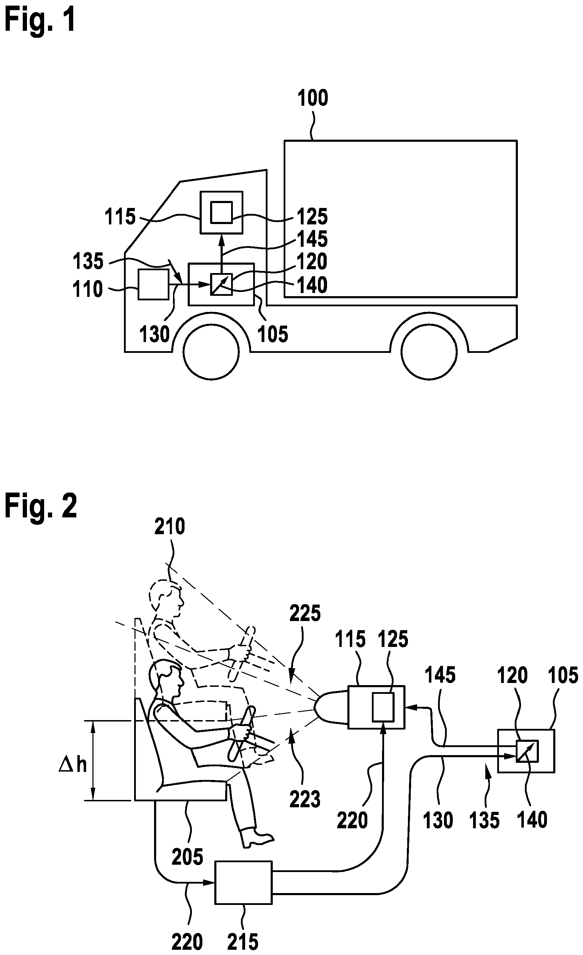

Fig. 1 zeigt eine schematische Ansicht eines Fahrzeugs 100 gemäß einem Ausführungsbeispiel. Das Fahrzeug 100 weist ein Steuergerät 105, eine Sensoreinrichtung 110 zur Erfassung einer Beschleunigung des Fahrzeugs 100 sowie eine Kamera 115 auf. Gemäß einem Ausführungsbeispiel, handelt es sich bei dem Fahrzeug 100 um einen Lastkraftwagen zur Beförderung von Gütern. Das Steuergerät 105 dient gemäß einem Ausführungsbeispiel dem Steuern von Fahrerassistenzfunktionen. Gemäß einem Ausführungsbeispiel weist das Steuergerät 105 eine Recheneinheit 120 zum Verarbeiten von Signalen und/oder Daten auf. Bei der Sensoreinrichtung 110 des Fahrzeugs 100 handelt es sich gemäß einem Ausführungsbeispiel um einen ESP-Sensor und/oder einen ABS-Sensor und/oder einen Gyroskopen und/oder einen Beschleunigungssensor und/oder eine Frontkamera des Fahrzeugs 100. Gemäß einem weiteren Ausführungsbeispiel kann es sich bei der Sensoreinrichtung 110 ebenso um einen Sitzhöhensensor handeln, wobei der Sitzhöhensensor zu jeder Zeit die Höhe eines Fahrzeugsitzes misst, wobei es sich bei dem Fahrzeugsitz insbesondere um den Fahrzeugsitz des Fahrzeugfahrers handelt. Die Kamera 115 ist gemäß einem Ausführungsbeispiel im Innenraum des Fahrzeugs 100 montiert und dient einer optischen Erkennung und Verfolgung eines Fahrzeugfahrers, insbesondere des Gesichts des Fahrzeugfahrers. Daher wird die Kamera 115 im Weiteren auch als Fahrerüberwachungskamera 115 bezeichnet. Die Fahrerüberwachungskamera 115 weist eine Bildstabilisierungseinheit 125 auf, die ausgebildet ist, eine optische und/oder softwarebasierte Bildstabilisierung durchzuführen.

Das Steuergerät 105 ist ausgebildet, zumindest ein Beschleunigungssignal 130 von der Sensoreinrichtung 110 des Fahrzeugs 100 mit einer Zeitinformation 135 einzulesen, wobei das Beschleunigungssignal 130 eine vertikale und/oder laterale und/oder longitudinale Beschleunigung des Fahrzeugs 100 repräsentiert. Die Recheneinheit 120 des Steuergeräts 105 ist ausgebildet, einen Bewegungsvektor 140 von zumindest einem Objekt und/oder einer Person, insbesondere einem zu überwachenden Fahrzeugfahrer, im Fahrzeuginnenraum unter Verwendung des zumindest einen Beschleunigungssignals 130 sowie der Zeitinformation 135 des Beschleunigungssignals 130 zu bestimmen. Gemäß einem Ausführungsbeispiel wird die vertikale Bewegung des Fahrzeugs 100 hierbei durch den berechneten Bewegungsvektor 140 für das Fahrgestell des Fahrzeugs 100 verallgemeinert. Die Recheneinheit 120 des Steuergeräts 105 ist ferner ausgebildet unter Verwendung des bestimmten Bewegungsvektors 140 des Objekts und/oder der Person einen Verschiebungsvektor 145 zu generieren, wobei das Steuergerät 105 den generierten Verschiebungsvektor 145 an die Fahrerüberwachungskamera 115 zur Verschiebung des optischen Suchfensters in einem Abbild der Fahrerüberwachungskamera 115 zur Erkennung des Objekts und/oder der Person bereitstellt. Das optische Suchfenster repräsentiert hierbei einen Teilbereich des von der Fahrerüberwachungskamera 115 eingelesenen Bildes. Die Bildstabilisierungseinheit 125 der Fahrerüberwachungskamera 115 ist nun ausgebildet das Objekt und/oder die Person in dem veränderten optischen Suchfenster unter Verwendung einer optischen und/oder softwarebasierten und/oder sensorbasierten Bildstabilisierung zu erkennen, wobei ein Verfolgungsalgorithmus die Position des erkannten Objekts und/oder der erkannten Person in dem optischen Suchfenster bestimmt.

Wenn das Fahrzeug 100 beispielsweise über eine Fahrbahnunebenheit fährt, absorbieren die Räder des Fahrzeugs 100 zuerst den Stoß und übertragen ihn auf die Federung, die den Stoß dämpft und die verbleibende Kraft zum Fahrgestell und somit zu den Fahrgästen, insbesondere hier dem Fahrzeugfahrer, überträgt. Daraufhin werden Informationen zur Beschleunigung des Fahrgestells des Fahrzeugs 100 aus verfügbaren Sensoreinrichtungen 110 wie einem ESP-Sensor, einem ABS-Sensor, einem Gyroskopen und/oder einen Beschleunigungssensor und/oder einer Frontkamera, aber nicht beschränkt auf diese, gesammelt und diese gesammelten Informationen zur Beschleunigung des Fahrzeugs 100 an das Steuergerät 105 bereitgestellt, das den resultierenden Bewegungsvektor 140 des Fahrzeuginneren berechnet. Der von dem Steuergerät 105 generierte und an die Fahrerüberwachungskamera 115 bereitgestellte Verfolgungsvektor 145 wird dann verwendet, um das Bild der Fahrerüberwachungskamera 115 entweder durch Software oder durch eine optische und/oder eine sensorische Kompensation zu stabilisieren.

Fig. 2 zeigt einen schematischen Systemaufbau eines Verfahrens zum Verfolgen eines Objekts in einem optischen Suchfenster einer Kamera gemäß einem Ausführungsbeispiel. Der Systemaufbau weist einen Fahrzeugsitz 205, ein Objekt, wobei es sich bei dem Objekt gemäß einem Ausführungsbeispiel um einen Fahrzeugfahrer 210 handelt, einen Sitzhöhensensor 215, das Steuergerät 105 des Fahrzeugs und die Fahrerüberwachungskamera 115 auf. Gemäß einem Ausführungsbeispiel handelt es sich bei dem Fahrzeugsitz 205 um einen gedämpften Fahrzeugsitz 205 eines Lastkraftwagens, der sich auf und ab bewegen kann. Der Sitzhöhensensor 215 ist ausgebildet, die Höhe Δh des Fahrzeugsitzes 205 zu jedem gegebenen Zeitpunkt zu messen. Gemäß einem Ausführungsbeispiel weist das Steuergerät 105 eine Recheneinheit 120 zum Verarbeiten von Signalen und/oder Daten auf. Gemäß einem Ausführungsbeispiel weist die Fahrerüberwachungskamera 115 eine Bildstabilisierungseinheit 125 auf, die ausgebildet ist, eine optische und/oder software und/oder sensorbasierte Bildstabilisierung durchzuführen. Der Systemaufbau zeigt ebenfalls einen zu optimierenden Erkennungsbereich 223 der Fahrerüberwachungskamera 115, wobei es gilt eine relative Position des Fahrzeugfahrers 210 in Bezug auf das optische Suchfenster des Bildsensors der Fahrerüberwachungskamera 115 vorherzusagen und das optische Suchfenster neu zu definieren, um den Fahrzeugfahrer 210 darin zu erkennen und verfolgen zu können.

Wie in Fig. 2 gezeigt, sendet der Sitzhöhensensor 215, der die Höhe Δh des Fahrzeugsitzes 205 zu jedem gegebenen Zeitpunkt misst, ein Beschleunigungssignal 130, das mit einer entsprechenden Zeitinformation 135 versehen ist, an die Recheneinheit 120 des Steuergeräts 105. Hierbei wird eine Information 220 zu einer Höhenänderung des Fahrzeugsitzes 205 in eine Beschleunigung umgerechnet und an die Recheneinheit 120 bereitgestellt, wobei das Beschleunigungssignal 130 eine vertikale Beschleunigung des Fahrzeugsitzes 205 repräsentiert. Unter Verwendung des Beschleunigungssignals 130 mit der Zeitinformation 135, das von dem Sitzhöhensensor 215 empfangen wird, wird ein Bewegungsvektor 140 des Fahrzeugfahrers 210 bestimmt, wobei mittels des Bewegungsvektors 140 ein Verschiebungsvektor 145 generiert und an die Fahrerüberwachungskamera 115 bereitgestellt wird. Die Fahrerüberwachungskamera 115 erkennt den Fahrzeugfahrer 210 in einem veränderten optischen Suchfenster, wobei das optische Suchfenster einen Teilbereich des von der Fahrerüberwachungskamera 115 eingelesenen Bildes repräsentiert. Der Verschiebungsvektor 145 wird im Folgenden von einem Verfolgungsalgorithmus verwendet, um das optische Suchfenster für den verfolgten Fahrzeugfahrer 210 in dem folgenden Bildausschnitt zu aktualisieren. Gemäß einem Ausführungsbeispiel wird die Höheninformation 220 ebenfalls an die Bildstabilisierungseinheit 125 der Fahrerüberwachungskamera 115 gesendet, die sie verwendet, um eine optische und/oder sensor- und/oder softwarebasierte Bildstabilisierung durchzuführen, um die Schärfe des Bildes zu verbessern und die Unschärfe des sich bewegenden Fahrzeugfahrers 210 in dem Bild zu reduzieren. Hierbei wird den vertikalen Bewegungen des Fahrzeugfahrers 210 entgegengewirkt, indem das Bild entsprechend stabilisiert wird. Die Fahrerüberwachungskamera 115 weist im Folgenden einen optimierten und angepassten Erkennungsbereich 225 auf, in dem das Gesicht des Fahrzeugfahrers 210 erkannt wird.

Der hier vorgestellte Verfahrensansatz zum Verfolgen eines Objekts und/oder einer Person in einem optischen Suchfenster einer Fahrerüberwachungskamera 115 zielt darauf ab, die Robustheit und Geschwindigkeit von Gesichtserkennungsalgorithmen in gemäß einem Ausführungsbeispiel einem Lastkraftwagen-Szenario zu verbessern, bei dem der Fahrzeugsitz 205 des Lastkraftwagens 100 gedämpft wird und sich auf und ab bewegen kann, um der Bewegung des Fahrzeugfahrers 210 und/oder der Fahrzeugkabine entgegenzuwirken. Anzumerken ist in diesem Zusammenhang, dass eine solche Bewegung in jeder Art eines weichen Sitzes stattfindet; der hier vorgestellte Ansatz ist daher nicht zwingend mit einem luftgefederten Sitz zu verwenden. Diese vertikale Bewegung kann zu einer großen und schnellen Verschiebung der Position des Kopfes des Fahrzeugfahrers 210 in Bezug auf den Bildsensor der Fahrerüberwachungskamera 115 führen. Durch Messen der vertikalen Bewegung des Fahrzeugsitzes 205 und dem Zuführen dieser Information zu der Recheneinheit 120 des Steuergeräts 105, die die Objektverfolgungsaufgabe durchführt, kann der Verfolgungsalgorithmus die Position des Fahrzeugfahrers 210 in dem nächsten Bildrahmen besser vorhersagen und ein adäquates Suchfenster besser definieren, um den Fahrzeugfahrer 210 darin zu finden.

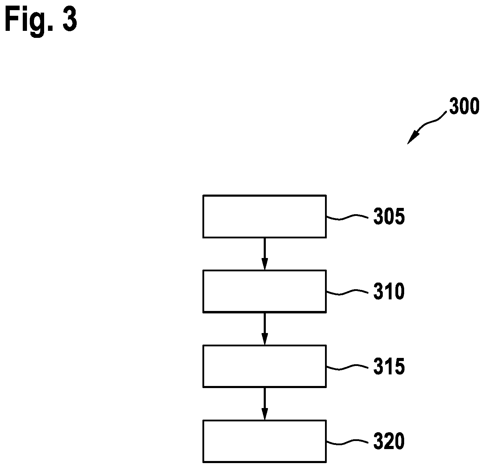

Fig. 3 zeigt ein Ablaufdiagramm eines Ausführungsbeispiels eines Verfahrens 300 zum Verfolgen eines Objekts in einem optischen Suchfenster einer Kamera für ein Fahrzeug gemäß einem Ausführungsbeispiel. Dabei kann es sich um das in Fig. 1 gezeigte Fahrzeug handeln, wobei das Verfahren 300 in Einrichtungen des in Fig. 1 gezeigten Steuergeräts ausgeführt werden kann.

In einem Schritt 305 des Verfahrens 300 wird zumindest ein eine Beschleunigung des Fahrzeugs repräsentierendes Beschleunigungssignal eingelesen, wobei das Beschleunigungssignal zusammen mit einer Zeitinformation eingelesen wird. Das zumindest eine Beschleunigungssignal repräsentiert hierbei eine vertikale und/oder laterale und/oder longitudinale Beschleunigung des Fahrzeugs und kann wahlweise von einem ESP-Sensor und/oder einen ABS-Sensor und/oder einem Gyroskopen und/oder einem Beschleunigungssensor und/oder einer Frontkamera des Fahrzeugs eingelesen werden. Außerdem kann im Schritt 305 des Verfahrens 300 das Beschleunigungssignal ebenfalls von einem Sitzhöhensensor des Fahrzeugs eingelesen werden, wobei eine Höhenänderung eines Fahrzeugsitzes in eine Beschleunigung umgerechnet und die Beschleunigung unter Verwendung einer Steifigkeit einer Feder des Fahrzeugsitzes berechnet wird. In einem weiteren Schritt 310 des Verfahrens 300 wird ein Bewegungsvektor von zumindest einem Objekt im Fahrzeuginnenraum und/oder in einer Fahrzeugumgebung unter Verwendung des zumindest einen eingelesenen Beschleunigungssignals sowie der Zeitinformation des eingelesenen Beschleunigungssignals bestimmt. Weiterhin weist das Verfahren 300 einen Schritt 315 auf, bei dem ein unter Verwendung des Bewegungsvektors generierter Verschiebungsvektor an die Kamera zur Verschiebung des optischen Suchfensters in einem Abbild der Kamera zur Erkennung des Objekts bereitgestellt wird. Das optische Suchfenster repräsentiert hierbei einen Teilbereich des von der Kamera eingelesenen Bildes. Ferner wird im Schritt 315 eine optische und/oder sensor- und/oder softwarebasierte Bildstabilisierung durchgeführt. Schließlich weist das Verfahren 300 einen Schritt 320 auf, bei dem das Objekt in dem veränderten optischen Suchfenster erkannt wird, wobei im Schritt 320 ferner ein Verfolgungsalgorithmus die Position des erkannten Objekts in dem optischen Suchfenster bestimmt.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (300) zum Verfolgen eines Objekts (210) in einem optischen Suchfenster einer Kamera (115) für ein Fahrzeug (100), wobei das Verfahren (300) die folgenden Schritte aufweist:
Einlesen (305) zumindest eines eine Beschleunigung des Fahrzeugs (100) und
eines Fahrzeugsitzes (205) repräsentierendes Beschleunigungssignals (130);
wobei im Schritt des Einlesens (305) die Beschleunigung unter Verwendung einer Steifigkeit einer Feder des Fahrzeugsitzes (205) berechnet wird;
Bestimmen (310) eines Bewegungsvektors (140) von zumindest einem Objekt (210) im Fahrzeuginnenraum und/oder in einer Fahrzeugumgebung unter Verwendung des zumindest einen Beschleunigungssignals (130); und
Bereitstellen (315) eines, unter Verwendung des bestimmten Bewegungsvektors (140), generierten Verschiebungsvektors (145) an die Kamera (115) zur Verschiebung des optischen Suchfensters in einem von der Kamera (115) zur Erkennung des Objekts (210) ermittelten Bildes, wobei das optische Suchfenster einen Teilbereich des von der Kamera (115) eingelesenen Bildes repräsentiert.

2. Verfahren (300) gemäß Anspruch 1, bei dem im Schritt des Einlesens (305) das zumindest eine Beschleunigungssignal (130) eingelesen wird, das eine vertikale und/oder laterale und/oder longitudinale Beschleunigung des Fahrzeugs (100) repräsentiert.

3. Verfahren (300) gemäß einem der vorangegangenen Ansprüche, bei dem im Schritt des Einlesens (305) das zumindest eine Beschleunigungssignal (130) von einem ESP-Sensor (110) und/oder einen ABS-Sensor (110) und/oder einem Gyroskopen (110) und/oder einem Beschleunigungssensor (110) und einem Sitzhöhensensor
und/oder einer Frontkamera (110) eingelesen wird.

4. Verfahren (300) gemäß einem der vorangegangenen Ansprüche, bei dem im Schritt des Einlesens (305) das zumindest eine Beschleunigungssignal (130) von einem Sitzhöhensensor (215) eingelesen wird, wobei eine Höhenänderung (220) eines Fahrzeugsitzes (205) in eine Beschleunigung und/oder eine Beschleunigungsänderung umgerechnet wird.

5. Verfahren (300) gemäß einem der vorangegangenen Ansprüche, bei dem im Schritt des Einlesens (305) das zumindest eine Beschleunigungssignal (130) mit einer Zeitinformation (135) eingelesen wird, wobei im Schritt des Bestimmens (310) der Bewegungsvektor (140) auf Basis der Zeitinformation (135) erfolgt.

6. Verfahren (300) gemäß einem der vorangegangenen Ansprüche, mit einem Schritt des Erkennens (320) des Objekts (210) in dem veränderten optischen Suchfenster.

7. Verfahren (300) gemäß Anspruch 6, bei dem im Schritt des Erkennens (320) ein Verfolgungsalgorithmus die Position des erkannten Objekts (210) in dem optischen Suchfenster bestimmt.

8. Verfahren (300) gemäß einem der vorangegangenen Ansprüche, bei dem im Schritt des Bereitstellens (315) eine optische und/oder softwarebasierte Bildstabilisierung durchgeführt wird.

9. Steuergerät (105), das eingerichtet ist, um die Schritte des Verfahrens (300) gemäß einem der vorangegangenen Ansprüche in entsprechenden Einheiten auszuführen.

10. Computerprogramm, umfassend Befehle, die bei der Ausführung des Programms durch einen Computer diesen veranlassen, dass er das Verfahren (300) gemäß einem der Ansprüche 1 bis 8 ausführt.

11. Maschinenlesbares Speichermedium, auf dem das Computerprogramm nach Anspruch 10 gespeichert ist.

## Claims

1. Method (300) for tracking an object (210) in an optical search window of a camera (115) for a vehicle (100), wherein the method (300) includes the following steps:
reading (305) at least one acceleration signal (130) representing an acceleration of the vehicle (100) and of a vehicle seat (205);
wherein, in the reading step (305), the acceleration is calculated using a stiffness of a spring of the vehicle seat (205);
determining (310) a movement vector (140) of at least one object (210) in the vehicle interior and/or in a vehicle environment using the at least one acceleration signal (130); and
providing (315) a displacement vector (145) generated by using the determined movement vector (140) to the camera (115) for displacing the optical search window in an image ascertained by the camera (115) for detecting the object (210), wherein the optical search window represents a partial region of the image read by the camera (115).

2. Method (300) according to Claim 1, in which, in the reading step (305), the at least one acceleration signal (130) which represents a vertical and/or lateral and/or longitudinal acceleration of the vehicle (100) is read.

3. Method (300) according to either of the preceding claims, in which, in the reading step (305), the at least one acceleration signal (130) is read by an ESP sensor (110) and/or an ABS sensor (110) and/or a gyroscope (110) and/or an acceleration sensor (110) and a seat height sensor and/or a front camera (110).

4. Method (300) according to any of the preceding claims, in which, in the reading step (305), the at least one acceleration sensor (130) is read by a seat height sensor (215), wherein a change in height (220) of a vehicle seat (205) is converted into an acceleration and/or a change in acceleration.

5. Method (300) according to any of the preceding claims, in which, in the reading step (305), the at least one acceleration signal (130) is read with a piece of time information (135), wherein, in the determination step (310), the movement vector (140) is determined based on the piece of time information (135).

6. Method (300) according to one of the preceding claims, having a step of detecting (320) the object (210) in the changed optical search window.

7. Method (300) according to Claim 6, in which, in the detection step (320), a tracking algorithm determines the position of the detected object (210) in the optical search window.

8. Method (300) according to any of the preceding claims, in which, in the provision step (315), optical and/or software-based image stabilization is performed.

9. Controller (105), which is configured to carry out the steps of the method (300) according to any of the preceding claims in corresponding units.

10. Computer program, comprising commands that, upon execution of the program by a computer, cause the latter to carry out the method (300) according to any of Claims 1 to 8.

11. Machine-readable storage medium, on which the computer program according to Claim 10 is stored.

## Revendications

1. Procédé (300) de suivi d'un objet (210) dans une fenêtre de recherche optique d'une caméra (115) d'un véhicule (100), le procédé (300) comprenant les étapes suivantes :
lire (305) au moins un signal d'accélération (130) représentant une accélération du véhicule (100) et d'un siège de véhicule (205) ; à l'étape de lecture (305),
l'accélération étant calculée à l'aide de la raideur d'un ressort du siège de véhicule (205) ;
déterminer (310) un vecteur de mouvement (140) d'au moins un objet (210) dans l'habitacle du véhicule et/ou dans un environnement de véhicule à l'aide de l'au moins un signal d'accélération (130) ; et
fournir (315) un vecteur de déplacement (145), généré à l'aide du vecteur de mouvement déterminé (140), à la caméra (115) afin de déplacer la fenêtre de recherche optique dans une image déterminée par la caméra (115) afin de détecter l'objet (210), la fenêtre de recherche optique représentant une partie de l'image lue par la caméra (115).

2. Procédé (300) selon la revendication 1, l'au moins un signal d'accélération (130) qui représente une accélération verticale et/ou latérale et/ou longitudinale du véhicule (100) étant lu à l'étape de lecture (305).

3. Procédé (300) selon l'une des revendications précédentes, dans lequel l'au moins un signal d'accélération (130) provenant d'un capteur ESP (110) et/ou d'un capteur ABS (110) et/ou d'un gyroscope (110) et/ou d'un capteur d'accélération (110) et d'un capteur de hauteur de siège et/ou d'une caméra frontale (110) est lu à l'étape de lecture (305).

4. Procédé (300) selon l'une des revendications précédentes, dans lequel l'au moins un signal d'accélération (130) provenant d'un capteur de hauteur de siège (215) est lu à l'étape de lecture (305), une variation de hauteur (220) d'un siège de véhicule (205) étant convertie en une accélération et/ou une variation d'accélération.

5. Procédé (300) selon l'une des revendications précédentes, dans lequel l'au moins un signal d'accélération (130) est lu à l'étape de lecture (305) avec des informations temporelles (135), le vecteur de mouvement (140) étant déterminé sur la base des informations temporelles (135) à l'étape de détermination (310).

6. Procédé (300) selon l'une des revendications précédentes, comprenant une étape de détection (320) de l'objet (210) dans la fenêtre de recherche optique modifiée.

7. Procédé (300) selon la revendication 6, dans lequel un algorithme de suivi détermine à l'étape de détection (320) la position de l'objet détecté (210) dans la fenêtre de recherche optique.

8. Procédé (300) selon l'une des revendications précédentes, dans lequel une stabilisation d'image optique et/ou logicielle est effectuée à l'étape de fourniture (315).

9. Organe de commande (105) qui est conçu pour réaliser les étapes du procédé (300) selon l'une des revendications précédentes dans des unités correspondantes.

10. Programme informatique comprenant des instructions qui, lorsque le programme est exécuté par un ordinateur, ordonnent à l'ordinateur de mettre en œuvre le procédé (300) selon l'une des revendications 1 à 8.

11. Support de stockage lisible par machine sur lequel est stocké le programme informatique selon la revendication 10.
